# EUROPEAN PATENT APPLICATION

(11) **EP 2 442 542 A1**
(43) Date of publication of application: **18.04.2012**
(21) Application number: 10843722.9
(22) Date of filing: 09.09.2010
(51) Int. Cl.: H04M 3/487

(54) **METHOD, APPARATUS AND TERMINAL FOR SETTING SCHEDULE OF COMMUNICATION TERMINAL**

(30) Priority: 21.01.2010 CN 201010001655
(71) Applicant: Huawei Device Co., Ltd., Longgang District Shenzhen Guangdong 518129 (CN)
(72) Inventor: WEI, Maohua, Shenzhen Guangdong 518129 (CN)
(74) Representative: Körber, Martin Hans
(86) International application number: PCT/CN2010/076772
(87) International publication number: WO 2011/088682

(57) **Abstract**

The present invention relates to a method, an apparatus, and a terminal for setting a schedule of a communication terminal. Including: obtaining schedule-affecting parameter information that affects implementation of a schedule; determining, according to the schedule-affecting parameter information and preset schedule-affecting parameter information that is necessary for the implementation of the schedule, that the schedule cannot be implemented, and performing processing according to a preset scheme for processing an unimplementable schedule. In implementation of the embodiments of the present invention, a user may arrange and manage his or her schedule more scientifically, reasonably, and flexibly, thus facilitating schedule arrangement of the user.

## Description

This application claims priority to Chinese Patent Application No. 201010001655.2, filed with the Chinese Patent Office on January 21, 2010 and entitled "METHOD, APPARATUS, AND TERMINAL FOR SETTING SCHEDULE OF COMMUNICATION TERMINAL", which is incorporated herein by reference in its entirety.

### FIELD OF THE INVENTION

The present invention relates to the field of communications technologies, and in particular, to a method, an apparatus, and a terminal for setting a schedule of a communication terminal.

### BACKGROUND OF THE INVENTION

A communication terminal plays a very important role in modern life. As a rhythm of life becomes faster, a scheduling function on the communication terminal (that is, setting a memo about something that should be done at certain time, and upon arrival of preset time, reminding a user to do the thing) is more widely used. Currently, most of communication terminals use a reminding method for classified schedules to simplify an operation of the user, for example, reminding the user of an important schedule and a general schedule in different ways, so that the user can distinguish a nature of a schedule more conveniently.

In a process of implementing the present invention, the inventor finds that the prior art has at least the following problems:

In the prior art, it is considered only a subjective classification without considering an impact of an objective factor on a schedule, so that using the scheduling function is rather inconvenient. For example, a user customizes on his or her mobile phone a schedule to go out for a trip with a friend at the weekend, but does not consider an impact of a weather factor on the schedule, and it rains at the weekend, so that it is impossible to realize the schedule for the trip, but the mobile phone still reminds the user to execute this schedule, and thus causing a great trouble for the user.

### SUMMARY OF THE INVENTION

Embodiments of the present invention provide a method, an apparatus, and a terminal for setting a schedule of a communication terminal, which may notify a user, as early as possible, of a schedule that does not meet a requirement of an objective circumstance, so that the user may make preparations in advance and arrange a schedule in a scientific and reasonable manner.

A method for setting a schedule of a communication terminal includes:
obtaining schedule-affecting parameter information that affects implementation of a schedule; and
determining, according to the schedule-affecting parameter information and preset schedule-affecting parameter information that is necessary for the implementation of the schedule, that the schedule cannot be implemented, and performing processing according to a preset scheme for processing an unimplementable schedule.

An apparatus for setting a schedule includes:
an information obtaining unit, configured to obtain schedule-affecting parameter information that affects implementation of a schedule;
a schedule information determining unit, configured to determine, according to the schedule-affecting parameter information that is obtained by the information obtaining unit and preset schedule-affecting parameter information that is necessary for the implementation of the schedule, that the schedule cannot be implemented; and
a schedule processing unit, configured to process, according to a preset scheme for processing an unimplementable schedule, the unimplementable schedule.

A communication terminal includes the apparatus for setting a schedule of a communication terminal.

It can be seen from the preceding technical solutions of the present invention, with the technical solutions of the embodiments of the present invention, an unimplementable schedule may be determined according to schedule-affecting parameter information that is obtained from a communication network and affects implementation of a schedule, and is notified to a user, so that the user may arrange and manage his or her schedule more scientifically, reasonably, and flexibly, thus facilitating a scheduled event of the user.

### BRIEF DESCRIPTION OF THE DRAWINGS

To describe the technical solutions in the embodiments of the present invention or in the prior art more clearly, the accompanying drawings used in the description of the embodiments or the prior art are briefly introduced in the following. Apparently, the accompanying drawings in the following description are only some embodiments of the present invention, and persons of ordinary skill in the art may also obtain other drawings according to these accompanying drawings without creative efforts.
FIG. 1 is a first schematic diagram of a processing procedure of a method for setting a schedule of a communication terminal according to an embodiment of the present invention;
FIG. 2 is a second schematic diagram of a processing procedure of a method for setting a schedule of a communication terminal according to an embodiment of the present invention;
FIG. 3 is a third schematic diagram of a processing procedure of a method for setting a schedule of a communication terminal according to an embodiment of the present invention;
FIG. 4 is a first schematic structural diagram of an apparatus for setting a schedule of a communication terminal according to an embodiment of the present invention; and
FIG. 5 is a second schematic structural diagram of an apparatus for setting a schedule of a communication terminal according to an embodiment of the present invention.

### DETAILED DESCRIPTION OF THE EMBODIMENTS

The technical solutions in the embodiments of the present invention are described clearly and completely in the following with reference to the accompanying drawings in the embodiments of the present invention. Apparently, the embodiments to be described are only a part rather than all of the embodiments of the present invention. Based on the embodiments of the present invention, all other embodiments that persons of ordinary skill in the art obtain without creative efforts fall within the protection scope of the present invention.

The embodiments of the present invention are described in further detail in the following with reference to the accompanying drawings.

Firstly, it should be noted that a communication terminal described in this embodiment of the present invention includes but is not limited to wireless communication electronic devices such as a mobile phone, a PDA (a palmtop computer), various kinds of smart phones, and a netbook, and a communication device such as a desktop computer. Specifically, in this embodiment, a mobile phone is taken as an example for description, which is not intended to limit the present invention.

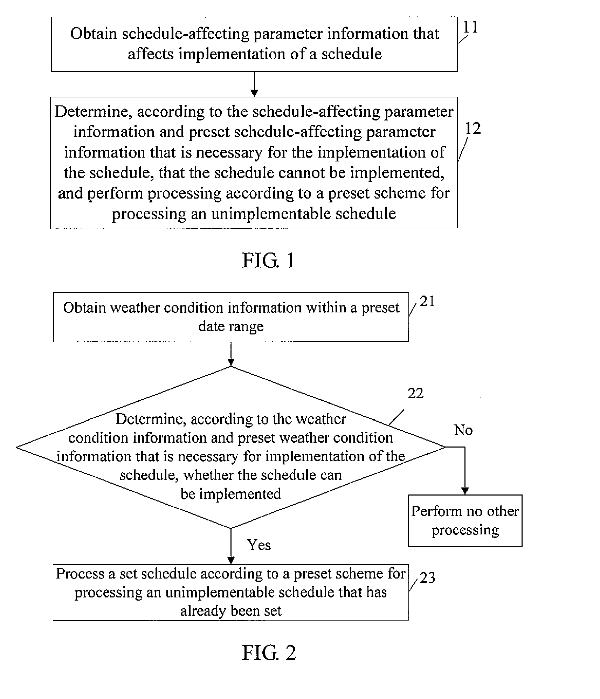

As shown in FIG. 1, a specific implementation process of a method for setting a schedule of a communication terminal provided in an embodiment of the present invention may include the following steps:
Step 11: Obtain schedule-affecting parameter information that affects implementation of a schedule.

For example, corresponding schedule-affecting parameter information may include one or more items of the following: weather condition information, traffic information, road condition information, and social significant information.

Specifically, a specific corresponding implementation manner of obtaining the schedule-affecting parameter information that affects the implementation of the schedule may include:

The communication terminal may specifically obtain the schedule-affecting parameter information that affects the implementation of the schedule through a communication network (for example, a wireless communication network, a wired communication network, or a local area network) or through another manner (for example, a manual input manner, an infrared manner, or a Bluetooth manner); for example, if a preset schedule of a mobile phone is to be affected by a weather condition, the mobile phone may obtain, through a mobile communication network, weather condition information of a period during which the preset schedule is implemented.

Furthermore, through the communication network, the communication terminal may obtain schedule-affecting parameter information that affects the implementation of the schedule within a preset date range; for example, for a mobile phone that is preset to obtain schedule-affecting parameter information every three days, if a preset schedule is to be affected by a weather condition and a traffic condition, the mobile phone obtains, through the mobile communication network, weather condition information and traffic condition information about three days.

Step 12: Determine, according to the schedule-affecting parameter information and preset schedule-affecting parameter information that is necessary for the implementation of the schedule, that the schedule cannot be implemented, and perform processing according to a preset scheme for processing an unimplementable schedule.

For example, a corresponding scheme for processing an unimplementable schedule may include but is not limited to one or more items of the following: updating schedule setting, notifying a local user, and notifying a user relating to the schedule.

Specifically, the determining, according to the schedule-affecting parameter information and preset schedule-affecting parameter information that is necessary for the implementation of the schedule, that the schedule cannot be implemented, and performing processing according to a preset scheme for processing an unimplementable schedule may further include:
for a schedule that is newly added to a communication device, determining, according to the schedule-affecting parameter information, preset schedule-affecting parameter information that does not satisfy an actual circumstance, and updating corresponding schedule-affecting parameter information that does not satisfy an actual circumstance to setting prohibition, in order to notify the local user of the corresponding information; and accordingly, in a first embodiment: for a mobile phone that adds a weather factor into schedule setting, when a user needs to add a new schedule into the mobile phone, the mobile phone obtains weather information within a preset date range through a communication network, so that the mobile phone prohibits, according to the preset scheme for processing an unimplementable schedule, the schedule from setting weather information that does not satisfy an actual circumstance as a necessary condition for implementation of the schedule, so as to remind the user to rearrange this schedule; and
for a schedule that has been set in the communication device, determining, according to the schedule-affecting parameter information and preset schedule-affecting parameter information that is necessary for the implementation of the schedule, that the schedule cannot be implemented, and performing, for an unimplementable schedule, one or more items of the following processing: updating schedule setting, notifying a local user, and notifying a user relating to the schedule; and accordingly, in a second embodiment: if a mobile phone that adds a weather factor into schedule setting sets a schedule for a trip with a friend at the weekend, and according to weather information obtained by the mobile phone from a communication network, it is determined that a preset requirement of the schedule cannot be met, where the preset requirement is that the schedule must be implemented on a sunny day, the mobile phone automatically notifies a cancelled schedule and a reason for cancellation to the user and the friend who has agreed to take a trip with the user.

To make the objective, technical solutions, and advantages of the present invention clearer, the embodiments of the present invention are described in further detail with reference to the accompanying drawings by enumerating the embodiments.

### Embodiment 1

As shown in FIG. 2, by taking a mobile phone that adds a weather factor into schedule setting as an example, a method for setting a schedule of a communication terminal provided in an embodiment of the present invention is described. Because in most cases, the weather forecast on a communication network is provided three days in advance, the mobile phone is preset to obtain weather condition information within three days; and if the mobile phone presets a schedule for climbing a mountain at ten o'clock on the morning of February 16, and presets that the schedule must be implemented on a sunny day, a specific implementation process of the method may include:
Step 21: Obtain weather condition information within a preset date range.

Specifically, at ten o'clock on the morning of February 13, the mobile phone may obtain, through a communication network, weather condition information at ten o'clock on the morning of February 16, which is overcast and rainy.

Step 22: Determine, according to the weather condition information and preset weather condition information that is necessary for implementation of the schedule, whether the schedule can be implemented; and if the schedule can be implemented, perform no other processing, and otherwise, execute step 23.

Specifically, according to a fact that a weather condition at ten o'clock on the morning of February 16 is overcast and rainy, where the weather condition at ten o'clock on the morning of February 16 is obtained in step 21, and that schedule-affecting parameter information that is necessary for the implementation of the schedule and is set in the schedule is: the schedule must be implemented on a sunny day, it may be determined that this schedule cannot be implemented, and therefore, step 23 is executed.

Step 23: Process a set schedule according to a preset scheme for processing an unimplementable schedule that has already been set.

Specifically, the mobile phone reminds, according to the preset scheme for processing the unimplementable schedule, a user that a weather condition required by the schedule does not satisfy an actual weather condition, so that the user arranges a schedule according to an actual circumstance.

In this embodiment of the present invention, a client may be notified of an unimplementable schedule among set schedules, so that the user may arrange his or her schedule more scientifically and reasonably, thus facilitating a trip event of the user.

### Embodiment 2

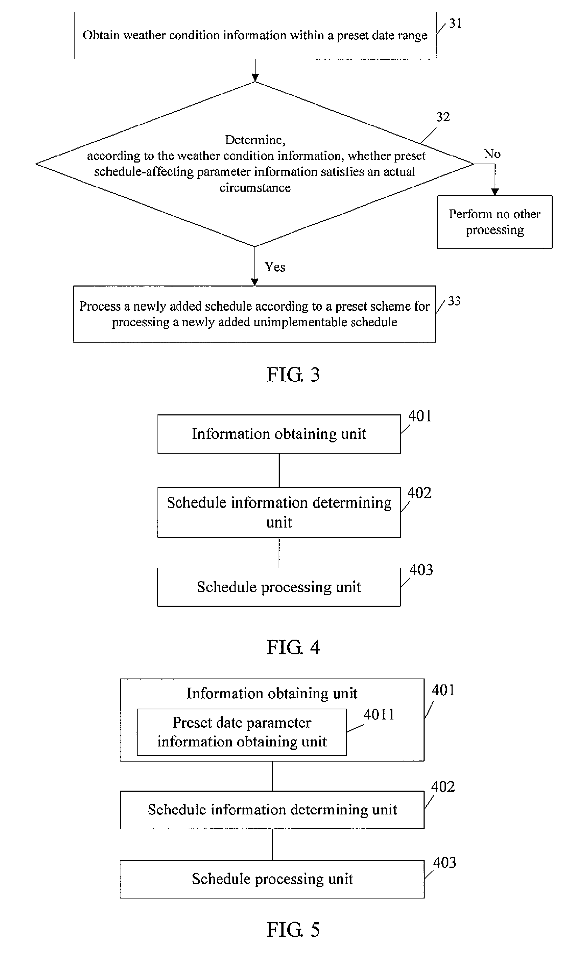

As shown in FIG. 3, by taking a mobile phone that adds a weather factor into schedule setting as an example, a method for setting a schedule of a communication terminal provided in an embodiment of the present invention is described. It is assumed that the weather forecast on a communication network is provided three days in advance, and that the mobile phone is preset to obtain weather condition information within three days, if a schedule for climbing a mountain tomorrow needs to be newly added, a specific corresponding implementation process may include:
Step 31: Obtain weather condition information within a preset date range.

Specifically, when a user starts a schedule setting function, the mobile phone obtains, through a communication network, weather condition information of tomorrow, which is overcast and rainy.

Step 32: Determine, according to the weather condition information, whether preset schedule-affecting parameter information satisfies an actual circumstance, and if the preset schedule-affecting parameter information satisfies the actual circumstance, perform no other processing, and otherwise, execute step 33.

Specifically, according to a fact that a weather condition of tomorrow is overcast and rainy, where the weather condition of tomorrow is obtained in step 31, it is determined that in the preset schedule-affecting parameter information in the schedule, "must be a sunny day" does not satisfy the actual circumstance, and therefore, step 33 is executed.

Step 33: Process a newly added schedule according to a preset scheme for processing a newly added unimplementable schedule.

Specifically, the mobile phone sets, according to a preset scheme for processing an unimplementable schedule, the schedule-affecting parameter information "must be a sunny day" that does not satisfy the actual circumstance to gray, that is, an unselectable state, so as to remind the user that the weather condition of tomorrow is overcast and rainy.

In implementation of this embodiment of the present invention, a client may be notified of schedule-affecting parameter information that does not satisfy an actual circumstance in a newly added schedule, so that the user may arrange his or her schedule more scientifically and reasonably, thus facilitating a trip event of the user.

Persons of ordinary skill in the art may understand that all or part of steps in the preceding method embodiments may be implemented by a program instructing relevant hardware. The preceding program may be stored in a computer readable storage medium, and when the program runs, the steps of the preceding method embodiments are executed; and the preceding storage medium may include any medium capable of storing program codes, such as an ROM, an RAM, a magnetic disk, or an optical disk.

An embodiment of the present invention further provides a schedule setting of a communication terminal, and as shown in FIG. 4, a specific implementation structure may specifically include:

An information obtaining unit 401 is configured to obtain schedule-affecting parameter information that affects implementation of a schedule.

For example, accordingly, the information obtaining unit 401 may obtain one or more items of the following: weather condition information, traffic information, road condition information, and social significant information that affect the implementation of the schedule.

A schedule information determining unit 402 is configured to determine, according to the schedule-affecting parameter information that is obtained by the information obtaining unit 401 and preset schedule-affecting parameter information that is necessary for the implementation of the schedule, that the schedule cannot be implemented.

For example, accordingly, the schedule information determining unit 402 may determine, according to the schedule-affecting parameter information that is obtained by the information obtaining unit 401 and the preset schedule-affecting parameter information that is necessary for the implementation of the schedule, that the schedule cannot be implemented.

Accordingly, an unimplementable schedule includes: at least one item of the following: a newly added schedule and a set schedule.

A schedule processing unit 403 is configured to perform, according to a preset scheme for processing an unimplementable schedule, corresponding processing on the unimplementable schedule that is determined by the schedule information determining unit 402.

For example, accordingly, the schedule processing unit 403 may perform, for the unimplementable schedule, processing such as updating schedule setting, notifying a local user, or notifying a user relating to the schedule.

Furthermore, as shown in FIG. 5, accordingly, the information obtaining unit 401 may specifically include:
a preset date parameter information obtaining unit 4011, configured to obtain schedule-affecting parameter information that affects the implementation of the schedule within a preset date range.

For example, accordingly, the preset date parameter information obtaining unit 4011 may obtain weather condition information, traffic information, road condition information, or social significant information within the preset date range, where the weather condition information, traffic information, road condition information, or social significant information affects the implementation of the schedule.

It should be noted that a specific operation and function implemented by each unit that is included in the communication terminal have been described in detail in the preceding method embodiments, which are not described in detail here.

In implementation of this apparatus embodiment, a user may be notified of a schedule that does not meet a requirement of an objective circumstance, so that the user may arrange his or her schedule more scientifically and reasonably, thus facilitating a trip event of the user.

An embodiment of the present invention further provides a communication terminal. The schedule setting of the communication terminal as shown in FIG. 4 or FIG. 5 is disposed on the communication terminal.

Persons of ordinary skill in the art may understand that all or part of procedures in the method in the preceding embodiments may be implemented by a computer program instructing relevant hardware. The program may be stored in a computer readable storage medium, and when the program runs, the procedures of the method in each preceding embodiment are executed. The storage medium may be a magnetic disk, an optical disk, a read only memory (Read-Only Memory, ROM), or a random access memory (Random Access Memory, RAM).

The preceding descriptions are only exemplary embodiments of the present invention, but are not intended to limit the protection scope of the present invention. Any modification or substitution that may be easily thought out by those skilled in the art within the technical scope disclosed by the present invention shall be covered within the protection scope of the present invention. Therefore, the protection scope of the present invention shall be subject to the protection scope of the appended claims.

## Claims

1. A method for setting a schedule of a communication terminal, comprising:
obtaining schedule-affecting parameter information that affects implementation of a schedule; and
determining, according to the schedule-affecting parameter information, and preset schedule-affecting parameter information that is necessary for the implementation of the schedule, that the schedule cannot be implemented, and performing processing according to a preset scheme for processing an unimplementable schedule.

2. The method according to claim 1, wherein the schedule-affecting parameter information comprises one or more items of the following: weather condition information, traffic information, road condition information, and social significant information.

3. The method according to claim 1 or 2, wherein the scheme for processing an unimplementable schedule comprises one or more items of the following: updating schedule setting, notifying a local user, and notifying a user relating to the schedule.

4. The method according to claim 1 or 2, wherein the unimplementable schedule comprises at least one item of the following: a newly added schedule and a set schedule.

5. The method according to claim 1 or 2, wherein the obtaining schedule-affecting parameter information that affects implementation of a schedule is obtaining schedule-affecting parameter information that affects implementation of a schedule within a preset date range.

6. An apparatus for setting a schedule, comprising:
an information obtaining unit, configured to obtain schedule-affecting parameter information that affects implementation of a schedule;
a schedule information determining unit, configured to determine, according to the schedule-affecting parameter information that is obtained by the information obtaining unit and preset schedule-affecting parameter information that is necessary for the implementation of the schedule, that the schedule cannot be implemented; and
a schedule processing unit, configured to process, according to a preset scheme for processing an unimplementable schedule, the unimplementable schedule.

7. The apparatus according to claim 6, wherein the schedule-affecting parameter information comprises one or more items of the following: weather condition information, traffic information, road condition information, and social significant information.

8. The method according to claim 6 or 7, wherein the scheme for processing an unimplementable schedule comprises one or more items of the following: updating schedule setting, notifying a local user, and notifying a user relating to the schedule.

9. The apparatus according to claim 6 or 7, wherein the unimplementable schedule comprises at least one item of the following: a newly added schedule and a set schedule.

10. The apparatus according to claim 6 or 7, wherein the information obtaining unit comprises:
a preset date parameter information obtaining unit, configured to obtain schedule-affecting parameter information that affects implementation of a schedule within a preset date range.

11. A communication terminal, comprising the apparatus for setting a schedule of a communication terminal according to any one of claims 6 to 10.
